# EUROPEAN PATENT SPECIFICATION

(11) **EP 2 627 721 B1**
(45) Date of publication and mention of the grant of the patent: **05.04.2017**
(21) Application number: 11832165.2
(22) Date of filing: 14.10.2011
(51) Int. Cl.: C09D 5/00

(54) **HIGH SOLIDS ANTIFOULING PAINT COMPOSITION**
FÄULNISVERHINDERNDE ANSTRICHFARBENZUSAMMENSETZUNG MIT HOHEM FESTSTOFFGEHALT
COMPOSITION DE PEINTURE ANTISALISSURE À HAUTE TENEUR EN MATIÈRES SOLIDES

(30) Priority: 14.10.2010 EP 10187490
(43) Date of publication of application: 21.08.2013
(73) Proprietor: Hempel A/S, 2800 Kongens Lyngby (DK); Dai Nippon Toryo Co., Ltd., Konohana-ku Osaka 554-0012 (JP)
(72) Inventor: AOKI, Ryuichi, Tochigi 324-8516 (JP); ASAYAMA, Yuichi, Tochigi 324-8516 (JP); TADASHI, Hatakeyama, 324-8516 Tochigi (JP); IWASE, Yoshiyuki, Tochigi 324-8516 (JP); SHIGEMATSU, Yasunobu, Tochigi 324-8516 (JP); TANABE, Hiroyuki, Tokyo 144-0052 (JP); CATALA, Pere, E-08031 Barcelona (ES); BADIA, Antoni Sánchez, E-08905 Barcelona (ES); SORIA, Maite, E-08026 Barcelona (ES); PALASI, Josep, E-08015 Barcelona (ES)
(74) Representative: Inspicos P/S
(86) International application number: PCT/DK2011/050385
(87) International publication number: WO 2012/048712

(56) References cited:
- EP-A1- 0 646 630
- EP-A1- 0 646 630
- EP-A1- 0 714 957
- EP-A1- 0 714 957
- EP-A1- 1 614 722
- EP-A1- 1 614 722
- EP-A2- 0 297 505
- WO-A1-00/77102
- WO-A1-00/77102
- WO-A1-99/33927
- WO-A1-2005/005516
- WO-A1-2005/005516
- WO-A1-2009/100908
- WO-A2-03/070832
- WO-A2-03/070832

## Description

### FIELD OF THE INVENTION

The present invention relates to novel low-solvent antifouling paint compositions based on a pre-polymer having hydrolysable silyl groups.

### BACKGROUND OF THE INVENTION

EP 1641862 B1 discloses a silyl ester copolymer composition.

WO 2009/100908 discloses an antifouling composition comprising polyoxalates as binders.

WO 99/33927 A1 discloses a process for inhibiting the fouling of a substrate involving a film-forming polymer carrying unreacted curable silicon-containing functional groups providing latent reactivity.

In view of the technologies of the prior art, there is still a need for alternative antifouling compositions having a high solids content.

### SUMMARY OF THE INVENTION

It has been found by the present inventor(s) that the above-mentioned goal can be accomplished by the self-polishing antifouling composition defined herein.

So, in a first aspect the present invention relates to the self-polishing antifouling composition defined in claim 1. A second aspect of the invention relates to the kit defined in claim 13 herein. A third aspect of the invention relates to the base component defined in claim 14 herein. A fourth aspect of the invention relates to the marine structure defined in claim 16 herein. A fifth aspect of the invention relates to the method of coating a structure defined in claim 17 herein.

### DETAILED DISCLOSURE OF THE INVENTION

### The antifouling coating composition

As mentioned above, the present invention relates to an antifouling coating composition. The coating composition comprises two or more components, one of which being a base component comprising pre-polymer, In particular a hydroxy-functional pre-polymer, and component b comprising or consisting of a curing agent and/or a curing catalyst, in particular one or more polyisocyanates. Although generally not preferred from a practical point of view, the coating composition may include further components. The two or more components of the coating composition are typically combined and mixed shortly before application of the coating composition to the intended substrate as will be explained in details further below.

### The base component

The base component of the coating composition comprises a pre-polymer which i) has at least one alkoxysilyl-functional group and/or ii) is curable in the presence of a curing agent and/or curing catalyst (component b), said pre-polymer having at least one side chain bearing at least one terminal group of the general formula (I): 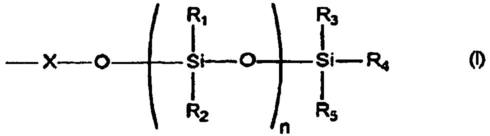 wherein X designates a carbonyl group (>C=O), n is an integer of 0-5,000, and R₁, R₂, R₃, R₄ and R₅ are each independently selected from C₁₋₂₀-alkyl and optionally substituted phenyl.

When used herein, C₁₋₂₀-alkyl is used in its normal meaning namely to cover alkyl groups having 1 to 20 carbon atoms, e.g. methyl, ethyl, 1-propyl, 2-propyl, 1-butyl, isobutyl, tert-butyl, n-octyl, n-decyl, etc.

In one embodiment thereof, the pre-polymer has at least one alkoxysilyl-functional group and at least one side chain bearing at least one terminal group of the general formula (I).

The fact that the pre-polymer has at least one alkoxysilyl-functional group means that the pre-polymer is self-curable at a temperature in the range of 0-50 °C under humid conditions.

The term "alkoxysilyl-functional group" is intended to mean a group of the formula

-Si(OR)ₙ (R)m

wherein R is a straight chain or branched C₁₋₆-alkyl group (e.g. methyl, ethyl, 1-propyl, 2-propyl, 1-butyl, isobutyl, tert-butyl, cyclohexyl, etc.), n is an integer of 1-3, m is an integer of 0-2, and n+m is 3.

Examples of suitable monomers to include in the pre-polymer in order to introduce at least one alkoxysilyl-functional group are:

| | | |
|---|---|---|
| 3-methacryloxypropylmethyldimethoxysilane | KBM-502* | 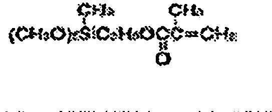 |
| 3-methacryloxypropyltrimethoxysilane | KBM-503* | 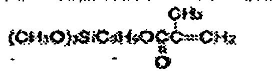 |
| 3-methacryloxypropyl-methyldiethoxysilane | KBE-502* | 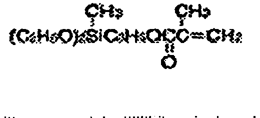 |
| 3-methacryloxypropyltriethoxysilane | KBE-503* | 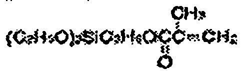 |
| 3-acryloxypropyltrimethoxysilane | KBM-5103* | 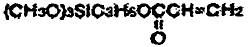 |

| | | |
|---|---|---|
| *All available from Shin-Etsu Chemical Co., Ltd. | | |

In another interesting embodiment thereof (which may be combined with the foregoing), the pre-polymer has at least one hydroxy-functional group and at least one side chain bearing at least one terminal group of the general formula (I).

In a currently preferred embodiment, the base component of the coating composition comprises a hydroxy-functional pre-polymer having at least one side chain bearing at least one terminal group of the general formula (I) 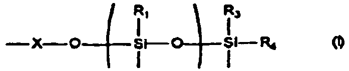 wherein X designates a carbonyl group (>C=O), n is an integer of 0-5,000, and R₁, R₂, R₃, R₄ and R₅ are each independently selected from C₁₋₂₀-alkyl and optionally substituted phenyl.

When the pre-polymer is hydroxy-functional, It must (on average) include at least a sufficient number of hydroxy groups so as to allow for reaction with the curing agent. Typically, the hydroxy value of the pre-polymer is in the range of 1-400, e.g. 2-400; preferably in the range of 5-400, such as 5-300, e.g. 10-150, in particular 10-100, e.g. 20-100 mg KOH/Solid·g. The hydroxy value is determined as described in the Examples section. The number of hydroxyl groups per pre-polymer molecule is typically 1-10, such as 1-5 or 2-4, e.g. 1-4 or 1-3. While n is an integer of 0, 1, 2, 3, 4 or more, up to about 5,000, such as 0-50, e.g. 0-10 or 1-15. In some special embodiments, n is 0, 1 or 2-5.

In some embodiments, n in general formula (I) is 0, such that the terminal group has the general formula (II): 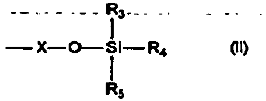 X is as defined above, and R₃-R₅ are each groups independently selected from the group consisting of C₁₋₂₀-alkyl and optionally substituted phenyl (e.g. phenyl).

With respect to the above formulae (I) and (II) it is preferred that each of the alkyl groups has up to about 6 carbon atoms, i.e. C₁₋₆-alkyl. Illustrative examples of substituents for the optionally substituted phenyl groups include halogen, sulphonyl, nitro, amino, C₁₋₆-alkyl, C₁₋₆-alkoxy and C₁₋₁₀-alkylcarbonyl. As indicated above, R₁-R₅ may be the same or different groups.

Alkyl groups include linear and branched as well as cyclic hydrocarbon groups, e.g. methyl, ethyl, 1-propyl, 2-propyl, 1-butyl, isobutyl, tert-butyl, cyclohexyl, octadecyl, etc. Preferred alkyl groups are linear, branched as well as cyclic hydrocarbon groups with 1-6 carbon atoms.

The groups of general formulae I and II represent a silyl ester which is hydrolysable in aquatic media, e.g. in sea water.

The acid value of the pre-polymer after silyl ester groups completely hydrolyzed is typically in the range of 5-500 mg KOH per grams of the pre-polymer [mg KOH/Solid·g], e.g. in the range of 30-350 mg KOH/Solid·g, such as in the range of 100-300 mg KOH/Solid·g. The acid value is determined as described in the Examples section.

In the case of the acid value of the pre-polymer after completely hydrolyzed is below 5, the polishing rate, as determined in accordance with the Polishing Rate Test defined herein, is typically below 1 µm per 10,000 Nautical Miles. On the other hand, in the case of an acid value of above 500, the polishing rate is typically too high.

The pre-polymer typically has a relatively low molecular weight so as to facilitate desirable properties with respect to viscosity without the need for extensive amounts of solvent or diluents. Hence typically, the weight average molecular weight (M_{w}) of the pre-polymer is in the range of 1,000-120,000 g/mol, such as in the range of 1,000-50,000 g/mol, e.g. in the range of 2,000-15,000 g/mol.

In some interesting embodiments, the glass transition temperature, T_{g}, of the pre-polymer is in the range of -10 to 100 °C.

In some interesting embodiments, the high shear viscosity of the pre-polymer is in the range of up to 200 poise measured in accordance with ASTM standard D 4287-00.

It is envisaged that a range of suitable polymer backbones are relevant for the pre-polymers having the above-mentioned side chains. In currently preferred embodiments, the backbone of the pre-polymer is selected from those of ethylenically unsaturated monomers, e.g. (meth)acrylate-type monomers, styrene-type monomers, maleic acid-type monomers, fumaric acid-type monomers, vinylacetate-type monomers, vinylalcohol-type monomers, etc.

With respect to such pre-polymers of ethylenically unsaturated monomers, e.g. those having a (meth)acrylate backbone, monomers comprising a terminal group of the general formula I above, and the general formula II below, may be synthesised as described in EP 0 297 505 B1.

Pre-polymers may be obtained by co-polymerisation of such monomers with other ethylenically unsaturated monomers. Examples of suitable ethylenically unsaturated monomers include methacrylate esters such as methyl methacrylate, ethyl methacrylate, butyl methacrylate, 2-ethylhexyl methacrylate, 2-hydroxyethyl methacrylate, 2-hydroxypropyl methacrylate and methoxy ethyl methacrylate; acrylate esters such as ethyl acrylate, butyl acrylate, 2-ethylhexyl acrylate, 2-hydroxyethyl acrylate, 2-hydroxypropyl acrylate and 4-hydroxybutyl acrylate, methoxy ethyl acrylate; maleic acid esters such as dimethyl maleate and diethyl maleate; fumaric acid esters such as dimethyl fumarate and diethyl fumarate; styrene, vinyltoluene, α-methylstyrene, vinyl chloride, vinyl acetate, butadiene, acrylamide, acrylonitrile, methacrylic acid, acrylic acid, isobornyl methacrylate and maleic acid.

The amount of ethylenically unsaturated monomers is typically not more than 99 % by weight, such as not more than 95 % by weight, of the total weight of the resulting pre-polymer, preferably not more than 90 % by weight, such as not more than 85 % by weight. Accordingly, the amount of monomers comprising the terminal groups of the general formula I above is at least 1 % by weight, e.g. at least 5 % by weight, such as 1-80 % by weight, or 5-80 % by weight, in particular at least 10 % by weight, such as 10-65 % by weight, or at least 15 % by weight, such as 15-60 % by weight of the pre-polymer.

The monomers comprising the terminal groups of the general formula I above typically constitutes 5-60 mol% of the monomer composition of the pre-polymer, preferably 10-50 mol%, such as 15-45 mol%.

The monomer(s) comprising hydroxyl group(s) typically constitutes 0.5-95 mol% of the monomer composition of the pre-polymer, preferably 0.5-30 mol%, such as 2-20 mol%.

In one embodiment, the pre-polymer, in addition to monomers comprising the terminal group of general formula I and the monomer(s) comprising hydroxyl group(s), includes other hydrophilic ethylenically unsaturated monomers, e.g. monomers which have a (meth) acryloyloxy group. Examples are methoxy ethyl (meth)acrylate or a higher polyethylene oxide derivative, such as ethoxy ethyl (meth)acrylate, propoxy ethyl (meth)acrylate, butoxy ethyl (meth)acrylate, a polyoxyethylene glycol monoalkyl ether (meth)acrylate, such as polyoxyethylene (n=8) glycol monomethyl ether methacrylate, or N-vinyl pyrrolidone.

In another interesting embodiment of the invention the binder system to be used in the coating composition according to the invention comprises a silylated acrylate copolymer having at least one side chain bearing at least one terminal group of the general formula II: 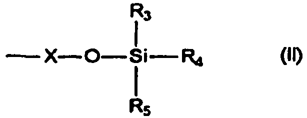 wherein X, R₃, R₄ and R₅ are as defined above.

Examples of monomers having a terminal group of the general formula II (shown above) are acid functional vinyl polymerisable monomers, such as monomers derived from acrylic acid, methacylic acid, maleic acid (preferably in the form of a monoalkyl ester with 1-6 carbon atoms) or fumaric acid (preferably in the form of a monalkyl ester with 1-6 carbon atoms).

With respect to the triorganosilyl group, i.e. the -Si(R₃)(R₄)(R₅) group, shown in the above formulae I or II, R₃, R₄ and R₅ may be the same or different. In one embodiment these substituents are the same.

Thus, specific examples of a suitable triorganosilyl group (i.e. the -Si(R₃)(R₄)(R₅) group) shown in the general formula I or II include trimethylsilyl, triethylsilyl, tri-n-propylsilyl, tri-n-butylsilyl, tri-*iso*-propylsilyl, tri-n-pentylsilyl, tri-n-hexylsilyl, tri-n-octylsilyl, tri-n-dodecylsilyl, triphenylsilyl, tri-p-methylphenylsilyl, tribenzylsilyl, tri-2-methylisopropylsilyl, tri-*tert*-butylsilyl, ethyldimethylsilyl, n-butyldimethylsilyl, di-*iso*-propyl-n-butylsilyl, n-octyl-di-n-butylsilyl, di-*iso*-propryloctadecylsilyl, dicyclohexylphenylsilyl, *tert*-butyldiphenylsilyl, dodecyldiphenylsilyl and diphenylmethylsilyl.

Specific examples of suitable methacrylic acid-derived monomers bearing at least one terminal group of the general formula I or II include trimethylsilyl (meth)acrylate, triethylsilyl(meth)acrylate, tri-n-propylsilyl(meth)acrylate, triisopropylsilyl (meth)acrylate, tri-n-butylsilyl (meth)acrylate, triisobutylsilyl (meth)acrylate, tri-tert-butylsilyl(meth)acrylate, tri-n-amylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri-p-methylphenylsilyl (meth)-acrylate, tribenzylsilyl (meth)acrylate, ethyldimethylsilyl (meth)acrylate, n-butyldimethylsilyl (meth)acrylate, diisopropyl-n-butylsilyl (meth)acrylate, n-octyldi-n-butylsilyl (meth)acrylate, diisopropylstearylsilyl (meth)acrylate, dicyclohexylphenylsilyl (meth)acrylate, t-butyldiphenylsilyl (meth)acrylate, and lauryldiphenylsilyl (meth)acrylate.

The number of silyl groups within each pre-polymer chain will have impact on the self-polishing properties of the resulting coating. Hence, it is speculated that silyl group equivalent weight (i.e. the average molecular weight of the pre-polymer divided by the average number of silyl groups per molecule) preferably should be in the range of 250-12,500 or 270-11,400, such as 300-1,500, e.g. 400-900, or 400-700.

In one embodiment, the pre-polymer on average includes 3-15, such as 3-12, silyl groups per pre-polymer while the molecular weight is in the range of 3,000-8,000 g/mol, such as in the range of 4,000-6,000 g/mol.

In an interesting embodiment of the present invention, the pre-polymer to be used in the binder system comprises monomer units with a terminal group of the general formula I or II (as discussed above) in combination with a second monomer B of the general formula III:

Y-(CH(R_{A})-CH(R_{B})-O)ₚ-Z (III)

wherein Z is a C₁₋₂₀-alkyl group or an aryl group; Y is an acryloyloxy group, a methacryloyloxy group, a maleinoyloxy group or a fumaroyloxy group; R_{A} and R_{B} are independently selected from the group consisting of hydrogen, C₁₋₂₀-alkyl and aryl; and p is an integer of 1 to 25.

If p>2, R_{A} and R_{B} are preferably hydrogen or CH₃, i.e. if p>2 the monomer B is preferably derived from a polyethylene glycol or a polypropylene glycol. If p=1 it is contemplated that monomers, wherein R_{A} and R_{B} are larger groups, such as C₁₋₂₀-alkyl or aryl, may also be useful for the purposes described herein.

As shown in formula III, monomer B has in its molecule an acryloyloxy group, a methacryloyloxy group, a maleinoyloxy group (preferably in the form of a mono-C₁₋₆-alkyl ester), or a fumaroyloxy group (preferably in the form of a mono-C₁₋₆-alkyl ester) as an unsaturated group (Y) and also alkoxy- or aryloxypolyethylene glycol. In the alkoxy- or aryloxypolyethylene glycol group, the degree of polymerisation (p) of the polyethylene glycol is from 1 to 25.

Specific examples of monomer B which has a (meth)acryloyloxy group in a molecule include methoxyethyl (meth)acrylate, ethoxyethyl (meth)acrylate, propoxyethyl (meth)acrylate, butoxyethyl (meth)acrylate, hexoxyethyl (meth)acrylate, methoxydiethylene glycol (meth)acrylate, methoxytriethylene glycol (meth)acrylate, ethoxydiethylene glycol (meth)acrylate, and ethoxytriethylene glycol (meth)acrylate.

Specific examples of monomer B which has a maleinoyloxy or fumaroyloxy group in a molecule include methoxyethyl n-butyl maleate, ethoxydiethylene glycol methyl maleate, ethoxytriethylene glycol methyl maleate, propoxydiethylene glycol methyl maleate, butoxyethyl methyl maleate, hexoxyethyl methyl maleate, methoxyethyl n-butyl fumarate, ethoxydiethylene glycol methyl fumarate, ethoxytriethylene glycol methyl fumarate, propoxydiethylene glycol methyl fumarate, butoxyethyl methyl fumarate, and hexoxyethyl methyl fumarate.

As will be understood by the person skilled in the art, other vinyl monomers may be incorporated in the resulting pre-polymer comprising either monomer units having a terminal group of the general formula II (shown above) or in the resulting pre-polymer comprising monomer units having a terminal group of the general formula II (shown above) in combination with the second monomer B of the formula III (shown above).

With respect to other monomers co-polymerisable with the above-mentioned monomers, use may be made of various vinyl monomers such as the vinyl polymerisable monomers discussed above.

The base component may apart from the pre-polymer have included therein one or more further ingredients. If desirable, however, some of or all of such other ingredients may alternatively be a part of the component constituting the curing agent and/or presented as a separate component.

Examples of further ingredients are further binder components such as: rosin, rosin derivatives such as metal salts of rosin i.e. resinates, oils such as linseed oil and derivatives thereof, castor oil and derivatives thereof, soy bean oil and derivatives thereof; and other polymeric binder components such as saturated polyester resins; polyvinylacetate, polyvinylbutyrate, polyvinylchloride-acetate, copolymers of vinyl acetate and vinyl isobutyl ether; vinylchloride; copolymers of vinyl chloride and vinyl isobutyl ether; alkyd resins or modified alkyd resins; hydrocarbon resins such as petroleum fraction condensates; chlorinated polyolefines such as chlorinated rubber, chlorinated polyethylene, chlorinated polypropylene; styrene copolymers such as styrene/butadiene copolymers, styrene/methacrylate and styrene/acrylate copolymers; acrylic resins such as homopolymers and copolymers of methyl methacrylate, ethyl methacrylate, n-butyl methacrylate, isobutyl methacrylate and isobutyl methacrylate; hydroxy-acrylate copolymers; polyamide resins such as polyamide based on dimerised fatty acids, such as dimerised tall oil fatty acids; cyclised rubbers; epoxy esters; epoxy urethanes; polyurethanes; epoxy polymers; polyamine resins; etc., as well as copolymers thereof.

The terms "rosin", "resinate" and the like is intended to refer to gum rosin; wood rosin of grades B, C, D, E, F, FF, G, H, I, 3, K, L, M, N, W-G, W-W (as defined by the ASTM 0509 standard); virgin rosin; hard rosin; yellow dip rosin; NF wood rosin; tall oil rosin; or colophony or colophonium. The terms "rosin" and "resinate" and the like are also intended to include suitable types of modified rosin, in particular oligomerisation; hydrogenation; dehydrogenation hydrogenation/disproportionation/dismutation; etc., that will reduce the amount of conjugated non-aromatic double bonds. Addition of rosin to the base component may improve mechanical properties of the paint e.g. reduce tendency of cracking.

It should be understood that the group of further binder components may include polymeric flexibilisers such as those generally and specifically defined in WO 97/44401 that is hereby incorporated by reference.

The dry matter of such further binder components typically constitutes 0-20 %, such as 0-15 %, by wet weight of the coating composition.

In some particularly interesting embodiments, the coating composition comprises rosin and/or rosin derivates in a cumulative amount of 1-40 %SV, such as 5-30 %SV, e.g. 5-25 by solid volume of the coating composition.

The base component may of course also include pigments, fillers, fibres, antifouling agents, dyes, additives, reactive diluents and solvents, as well as other suitable constituents to be included in the binder phase of coating compositions.

However, such constituents (i.e. pigments, fillers, fibres, antifouling agents, dyes, additives and solvents) are typically incorporated in a total amount of up to 85 %, e.g. up to 80 %, or up to 60 %, such as up to 50 %, by solids volume, e.g. in amounts of 20-50 % or 35-50 % by solids volume of the coating composition. When related to the wet weight of the total coating composition (i.e. the base component, curing agent and any further component(s)), such constituents are typically incorporated in a total amount of up to 60 %, such as up to 50 % by wet weight, e.g. in amounts of 0.1-40 %, or 0.1-30 %, by wet weight of the coating composition. In certain high solids embodiments, such constituents are typically incorporated in a total amount of 60-85 %, such as 75-80 % by wet weight of the coating composition.

Examples of pigments are copper, copper metal alloys such as copper-nickel alloys, grades of metal oxides such as cuprous oxide (Cu₂O) and cupric oxide (CuO), titanium dioxide, red iron oxide, zinc oxide, carbon black, graphite, yellow iron oxide, red molybdate, yellow molybdate, zinc sulfide, antimony oxide, sodium aluminium sulfosilicates, quinacridones, phthalocyanine blue, phthalocyanine green, titaniumdioxide, black iron oxide, graphite, indanthrone blue, cobalt aluminium oxide, carbazole dioxazine, chromium oxide, isoindoline orange, bis-acetoacet-o-tolidiole, benzimidazolon, quinaphtalone yellow, isoindoline yellow, tetrachloroisoindolinone, quinophthalone yellow. Such materials are characterised in that they render the final paint coat non-transparent and non-translucent. Even though, e.g., copper, copper metal alloys, cuprous oxide and cupric oxide may have antifouling agent characteristics, it is understood that in the present context such constituents are only considered as "pigments".

When cuprous oxide is present in the coating composition, the Cu₂O content is preferably 1-40 % by solids volume, such as in the range of 5-35 % by solids volume of the coating composition. When expressed by wet weight of the coating composition, and when cuprous oxide is present, the Cu₂O content is preferably at least 5 % by wet weight, such as in the range of 10-75 % by wet weight of the coating composition. In certain high solids embodiments, Cu₂O content is preferably at least 5 % by wet weight, such as in the range of 10-80 % by wet weight of the coating composition.

The pigments phase may further include pigment-like ingredients such as fillers.

Examples of fillers are calcium carbonate, dolomite, talc, mica, barium sulfate, kaolin, silica (including pyrogenic silica, colloidal silica, fumed silica, etc.), perlite, magnesium oxide, calcite and quartz flour, molecular sieves, synthetic zeolites, calcium silicophosphate, hydrated aluminium silicate (bentonite), organo-midified clays, anhydrous gypsum, etc. These materials are characterised in that they do not render the final paint coat non-translucent and therefore do not contribute significantly to hide any material below the final paint coat.

It should be noted that some of the fillers (and pigments) may provide certain advantageous properties of the types provided by the additives of the binder phase (e.g. as stabilizers against moisture, dehydrating agents, water scavengers, thickeners and anti-settling agents, etc.), however for the purpose of the present application with claims, such particulate materials are to be construed as being part of the pigment phase.

Examples of fibres are e.g. those generally and specifically described in WO 00/77102, which is hereby incorporated by reference.

In order for a certain particle to be considered as a fibre within the present context, the ratio between the greatest dimension and the smallest dimension perpendicular to the length dimension in substantially all points along the longitudinal axis (the length dimension - longest dimension) should not exceed 2.5:1, preferably not exceeding 2:1. Furthermore, the ratio between the longest dimension and the average of the two shortest dimensions should be at least 5:1. Thus, fibres are characterised of having one long dimension and two short dimension, where the long dimension is substantially longer than the two short dimensions (typically by an order of magnitude, or even more), and the two short dimensions are substantially equal (of the same order of magnitude). For completely regular fibres, i.e. fibres having a cylindrical shape, it is evident how to determine the "length" (longest dimension) and the two (identical) shortest dimensions. For more irregular fibres, it is believed that the relationship between the dimensions can be evaluated by the following hypothetical experiment: A regular, right-angled box is constructed around the fibre. The box is constructed so as to have the smallest possible volume, as it should fully comprise the fibre. To the extent that the fibre is curved, it is (again hypothetically) assumed that the fibre is flexible so that the volume of the hypothetical box can be minimised by "bending" the fibre. In order for the "fibre" to be recognised as such in the present context, the ratio between the two smallest dimensions of the box should be at the most 2.5:1 (preferably 2:1) and the ratio between the longest dimension of the box and the average of the to smallest dimensions of the box should be at least 5:1.

At present, especially preferred are mineral fibres such as mineral-glass fibres, wollastonite fibres, montmorillonite fibres, tobermorite fibres, atapulgite fibres, calcined bauxite fibres, volcanic rock fibres, bauxite fibres, rockwool fibres, and processed mineral fibres from mineral wool.

When present, the concentration of the fibres is normally in the range of 0.5-15 %, e.g. 1-10 % by solids volume of the coating composition.

When related to the total composition (wet weight), and when present, the concentration of the fibres is normally in the range of 0.1-20 %, e.g. 0.5-10 %, by wet weight of the coating composition. In certain high solids embodiments, the concentration of the fibres is normally in the range of 0.1-25 %, e.g. 0.5-15 %, by wet weight of the coating composition.

It should be understood that the above ranges refer to the total amount of fibres, thus, in the case where two or more fibre types are utilised, the combined amounts should fall within the above ranges.

The coating composition may also comprise one or more antifouling agents as is customary within the field. Examples of antifouling agents are: metallo-dithiocarbamates such as bis(dimethyldithiocarbamato)zinc, ethylene-bis(dithiocarbamato)zinc, ethylene-bis(dithio-carbamato)manganese, and complexes between these; bis(1-hydroxy-2(1H)-pyridine-thionato-O,S)-copper (Copper Omadine); copper acrylate; bis(1-hydroxy-2(1H)-pyridine-thionato-O,S)-zinc (Zinc Omadine); phenyl(bispyridyl)-bismuth dichloride; metal salts such as cuprous thiocyanate, basic copper carbonate, copper hydroxide, barium metaborate, and copper sulphide; heterocyclic nitrogen compounds such as 3a,4,7,7a-tetrahydro-2-((trichloromethyl)-thio)-1H-isoindole-1,3(2H)-dione, pyridine-triphanylborane, 1-(2,4,6-trichlorophenyl)-1H-pyrrole-2,5-dione, 2,3,5,6-tetrachloro-4-(methylsulfonyl)-pyridine, 2-methylthio-4-tert-butylamino-6-cyclopropylamine-s-triazin, and quinoline derivatives; heterocyclic sulfur compounds such as 2-(4-thiazolyl)benzimidazole, 4,5-dichtoro-2-n-octyl-4-isothiazolin-3-one, 4,5-dichloro-2-octyl-3(2H)-isothiazoline, 1,2-benzisothiazolin-3-one, and 2-(thiocyanatomethylthio)-benzothiazole; urea derivatives such as N-(1,3-bis(hydroxymethyl)-2,5-dioxo-4-imidazotidinyl)-N,N'-bis(hydroxymethyl)urea, and N-(3,4-dichlorophenyl)-N,N-dimethylurea, and N,N-dimethylchlorophenylurea; amides or imides of carboxylic acids; sulfonic acids and of sulfenic acids such as 2,4,6-trichlorophenyl maleimide, 1,1-dichloro-N-((dimethylamino)sulfonyl)-1-fluoro-N-(4-methylphenyl)-methanesulfenamide, 2,2-dibromo-3-nitrilo-propionamide, N-(fluorodichloromethylthio)-phthalimide, N,N-dimethyl-N'-phenyl-N'-(fluorodichloromethylthio)-sulfamide, and N-methylol formamide; salts or esters of carboxylic acids such as 2-((3-iodo-2-propynyl)oxy)-ethanol phenylcarbamate and N,N-didecyl-N-methyl-poly(oxyethyl)ammonium propionate; amines such as dehydroabiethylamines and cocodimethylamine; substituted methane such as di(2-hydroxy-ethoxy)methane, 5,5'-dichloro-2,2'-dihydroxydiphenylmethane, and methylene-bisthiocyanate; substituted benzene such as 2,4,5,6-tetrachloro-1,3-benzenedicarbonitrile, 1,1-dichloro-N-((dimethylamino)-sulfonyl)-1-fluoro-N-phenylmethanesulfenamide, and 1-((diiodomethyl)sulfonyl)-4-methyl-benzene; tetraalkyl phosphonium halogenides such as tri-n-butyltetradecyl phosphonium chloride; guanidine derivatives such as n-dodecylguanidine hydrochloride; disulfides such as bis-(dimethylthiocarbamoyl)-disulfide, tetramethylthiuram disulfide; imidazole containing compound, such as medetomidine; 2-(p-chlorophenyl)-3-cyano-4-bromo-5-trifluoromethyl pyrrole and mixtures thereof. In one embodiment, the antifouling agent is not one of N-(1,3-bis(hydroxymethyl)-2,5-dioxo-4-imidazolidinyl)-N,N'-bis(hydroxymethyl)urea, di(2-hydroxy-ethoxy)methane, and 5,5'-dichloro-2,2'-dihydroxy-diphenylmethane, because these agents may react with isocyanates.

Presently, it is preferred that the antifouling agent is an agent that does not comprise tin.

In one preferred embodiment the coating composition comprises an antifouling agent selected from the group consisting of pyridine-triphenylborane, 2-(p-chlorophenyl)-3-cyano-4-bromo-5-trifluoromethyl pyrrole and imidazole containing compounds, such as medetomidine.

The total amount of the antifouling agent(s), if present, is typically in the range of up to 30 %, such as 0.05-25 %, by solids volume of the coating composition, e.g. 0.05-20 % by solids volume of the coating composition.

When related to the total weight of the coating composition, the total amount of the antifouling agent(s), if present, is typically in the range of 0-40 %, such as 0.05-30 %, by wet weight of the coating composition, e.g. 0.05-20 % by wet weight of the coating composition. In certain high solids embodiments, the total amount of the antifouling agent(s), if present, is normally in the range of 0-50 %, e.g. 0.05-25 %, by wet weight of the coating composition.Examples of dyes are 1,4-bis(butylamino)anthraquinone and other anthraquinone derivatives; toluidine dyes etc.

Examples of additives are i) plasticizers such as chlorinated paraffin; phthalates such as dibutyl phthalate, benzylbutyl phthalate, dioctyl phthalate, diisononyl phthalate and diisodecyl phthalate; phosphate esters such as tricresyl phosphate, nonylphenol phosphate, octyloxipoly(ethyleneoxy)ethyl phosphate, tributoxyethyl phosphate, isooctylphosphate and 2-ethylhexyl diphenyl phosphate; sulfonamides such as N-ethyl-p-toluensulfonamide, alkyl-p-toluene sulfonamide; adipates such as bis(2-ethylhexyl)adipate), diisobutyl adipate and di-octyladipate; phosphoric acid triethyl ester; butyl stearate; sorbitan trifoliate; and epoxidised soybean oil; ii) surfactants such as derivatives of propylene oxide or ethylene oxide such as alkylphenol-ethylene oxide condensates; ethoxylated monoethanolamides of unsaturated fatty acids such as ethoxylated monoethanolamides of linoleic acid; sodium dodecyl sulfate; alkylphenol ethoxylates; and soya lecithin; wetting agents and dispersants; iii) defoaming agents such as silicone oils; iv) stabilisers such as stabilisers against light and heat, e.g. hindered amine light stabilisers (HALS), 2-hydroxy-4-methoxybenzophenone, 2-(5-chloro-(2H)-benzotriazol-2-yl)-4-methyl-6-(tert-butyl)phenol, and 2,4-ditert-butyl-6-(5-chlorobenzotriazol-2-yl)phenol; stabilisers against moisture or water scavengers, molecular sieves, oxazolidines, substituted silanes, and ortho formic acid triethyl ester; v) stabilisers against oxidation such as butylated hydroxyanisole; butylated hydroxytoluene; propylgallate; tocopherols; 2,5-di-tert-butyl-hydroquinone; L-ascorbyl palmitate; carotenes; vitamin A; vi) inhibitors against corrosion such as aminocarboxylates, ammonium benzoate, barium/-calcium/zinc/magnesium salts of alkylnaphthalene sulfonic acids, zinc phosphate; zinc metaborate; vii) coalescing agents such as glycols, 2-butoxy ethanol, and 2,2,4-trimethyl-1,3-pentanediol monoisobutyrate; and viii) thickeners and anti-settling agents such as aluminium tristearate, aluminium monostearate, ricinus oil, xanthan gum, salicylic acid, hydrogenated castor oil, polyamide waxes and polyethylene waxes; and ix) dehydrating agents such as orthoproplonic acid ester, orthoformic acid ester, orthoacetic acid ester, alkoxysilane, calcium sulphate and alkyl silicates like tetra ethyl ortosilicate.

It is preferred that the coating compositions comprise dyes and additives in a cumulative amount of 0-20 %, e.g. 1-20 %, by solids volume of the coating composition.

When related to the total weight of the coating composition, it is preferred that the coating compositions comprise dyes and additives in a cumulative amount of 0-10 %, e.g. 1-10 %, by wet weight of the coating composition. In certain high solids embodiments, the coating compositions comprise dyes and additives in a cumulative amount of 0-15 %, e.g. 1-15 %, by wet weight of the coating composition.

The base component may like component b (see below) further include one or more reactive diluents.

Examples of reactive diluents to be included in the base component are hydroxy-polyether resins, such as polyalkyleneglycol monoalkylethers, e.g. of the formula R-(OCH₂CH₂)ₙ-OH, wherein R is C₁₋₆-alkyl and n is an integer of 1-50, alcohols, etc.

When component b includes one or more isocyanates, the base component may include one or more accelerators, e.g. one or more selected from tetramethylbutanediamine (TMBDA), N-alkyl morpholines, triethylamine (TEA), 1,8-diazabicyclo[5.4.0]undecene-7 (DBU), pentamethyldiethylenetriamine (PMDETA), dioctyltin dilaurate, dibutyltin dilaurate, and dibutyltin oxide. In some embodiments, the one or more accelerators are selected from dioctyltin dilaurate, dibutyltin dilaurate, and dibutyltin oxide. In certain instances, the one or more accelerators are presented as a separate component (in fact a third component in addition to the base component and component b).

Examples of solvents are aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ethyl ether; esters such as ethyl acetate, propyl acetate, methoxypropyl acetate, n-butyl acetate and 2-ethoxyethyl acetate; chlorinated hydrocarbons such as methylene chloride, tetrachloroethane and trichloroethylene; and mixtures thereof.

When related to the total weight of the coating composition, it is preferred that the coating compositions comprise one or more solvents In a cumulative amount of 0-30 %, such as 0-20 %, by wet weight of the coating composition. In certain high solids embodiments, the coating compositions comprise one or more solvents in a cumulative amount of 0-10 %, e.g. 0-5 %, by wet weight of the coating composition.

In the present context the term "% by wet weight" is intended to mean the weight/weight percentage of the wet matter of the coating composition. It should be understood that solvents are included.

In the present context the term "% by solids volume" is intended to mean the volume/volume percentage of the solid (i.e. non-volatile) matter of the coating composition. It should be understood that any solvents (i.e. volatiles) are disregarded.

### Component b (the curing agent and/or curing catalyst)

The coating composition also includes component b which comprises or consists of a curing agent and/or a curing catalyst, which preferably comprises one or more polyisocyanates.

Suitable poly-isocyanates for use as the curing agent include the known poly-isocyanates of polyurethane chemistry. Examples of suitable low molecular weight poly-isocyanates having a molecular weight of 168 to 300 include hexamethylene diisocyanate (HMDI), 2,2,4-and/or 2,4,4-trimethyl-1,6-hexamethylene diisocyanate, dodecamethylene diisocyanate, 2,4-diisocyanato-1-methyl-benzene (toluene diisocyanate, TDI), 2,4-diisocyanato-1-methyl-benzene, 1,4-diisocyanatocyclohexane, 1-isocyanato-3,3,5-trimethyl-5-isocyanatomethyl-cyclohexane (1PDI), 2,4'-and/or 4,4'-diisocyanato-dicyclohexyl methane, 2,4-and/or 4,4'-diisocyanato-diphenyl methane and mixtures of these isomers with their higher homologues which are obtained in known manner by the phosgenation of aniline/formaldehyde condensates, 2,4-and/or 2,6-diisocyanatotoluene and any mixtures of these compounds.

In one embodiment, the one or more polyisocyanates are selected from aliphatic polyisocyanates, e.g. hexamethylene diisocyanate (HMDI), 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, and 2,4-and/or 4,4'-diisocyanato-diphenyl methane. In some variants hereof, the coating composition also comprises one or more catalysts, e.g. one or more selected from tetramethylbutanediamine (TMBDA), N-alkyl morpholines, triethylamine (TEA), 1,8-diazabicyclo[5.4.0]undecene-7 (DBU), pentamethyldiethylenetriamine (PMDETA), dioctyltin dilaurate dibutyltin dilaurate, and dibutyltin oxide, in particular from dioctyltin dilaurate dibutyltin dilaurate, and dibutyltin oxide. In other variants, the coating composition is devoid any such catalysts.

In one embodiment, the one or more polyisocyanates are selected from aromatic polyisocyanates, e.g. 2,4-diisocyanato-1-methyl-benzene (toluene diisocyanate, TDI), 2,4-diisocyanato-1-methyl-benzene and mixtures of these isomers with their higher homologues which are obtained in known manner by the phosgenation of aniline/formaldehyde condensates, 2,4-and/or 2,6-diisocyanatotoluene and any mixtures of these compounds.

In some embodiments, it may be interesting to use derivatives of these monomeric poly-isocyanates, as is conventional in coatings technology. These derivatives include poly-isocyanates containing biuret groups.

The modified poly-isocyanates are particularly preferred: N,N',N"-tris-(6-isocyanatohexyl)-biuret and mixtures thereof with its higher homologues and N,N',N"-tris-(6-Isocyanatohexyl)-isocyanurate and mixtures thereof with its higher homologues containing more than one isocyanurate ring.

Examples of suitable commercially available aliphatic polyisocyanate resins are:
Desmodur N3900 (formerly VP2410), ex Bayer (Germany)
Desmodur N3600, ex Bayer (Germany)
Desmodur N3800, ex Bayer (Germany)
Tolonate HDT-LV2, ex Rhodia (France)
Desmodur N3390, ex Bayer (Germany)
Tolonate HDT90, ex Rhodia (France)
Basonat HI 190 B/S, ex BASF (Germany)
Desmodur N75, ex Bayer (Germany)
Bayhydur VP LS 2319, ex Bayer (Germany)
Tolonate IDT 70B, ex Rhodia (France)
Desmodur H, ex Bayer (Germany)

Examples of suitable commercially available aromatic polyisocyanates resins are:
Desmodur L67 BA (Bayer Material Science)
Desmodur E21 (Bayer Material Science)
Desmodur VL (Bayer Material Science)
Voratron EC 112 (Dow Chemicals)
Desmodur E23 (Bayer Material Science)
Desmodur E 1660 (Bayer Material Science)
Suprasec 2495 (Huntsman Advanced Materials)

The isocyanate equivalent weight of said one or more polyisocyanates is typically in the range of 50-3,000 such as 50-2,000, e.g. 80-1,000 or 60-1,000, such as 80-500 or 100-500.

The ratio between the hydroxy groups of the pre-polymer and the isocyanate groups of the polyisocyanates (NCO:OH) is typically in the range of 0.3:1 to 1.5:1, such as 0.5:1 to 1.5:1, or 0.5:1 to 1.2:1, or 0.3:1 to 1.2:1.

The component b may like the base component (see above) further include one or more reactive diluents.

Examples of reactive diluents to be included in component b are mono isocyanates, etc.

It is preferred that the coating composition comprise reactive diluents in a cumulative amount of 0-40 %, e.g. 0-20 %, such as 0-10 %, by solids volume of the coating composition.

### Preparation of the coating composition

The base component of the present invention is prepared usually by mixing and dispersing the above components all at once or in a divided fashion by a conventional apparatus for producing coating composition (paints), such as a ball mill, a pearl mill, a three-roll mill, a high speed disperser. The base component according to the invention, optionally containing fibres, may be filtrated using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration. Prior to application, the base component is mixed with component b. In the instances where any accelerators are presented as a separate component, the base component is mixed with component b and the one or more accelerators prior to application.

The coating composition of the present invention may be coated as it is or after having the viscosity adjusted by a diluting solvent, on a ship or a maritime structure having a rust preventive coating material coated thereon, by e.g. airless spray-coating, plural component airless, air spray-coating, roller coating or brush coating. The exact technique chosen depends upon the object to be protected and also upon the particular composition (such as its viscosity, pot life etc.) and upon the particular situation. Preferred applications techniques are spraying and by means of a brush or a roller.

It should be understood that the base component and the curing agent, and any further components, are prepared and shipped separately, and are thoroughly mixed immediately prior to application.

Hence, the present invention further provides a kit comprising the antifouling paint composition as defined herein, wherein a first container holds the component a (the base component) and a second container holds the component b (the curing agent and/or curing catalyst).

Moreover, the present invention also provides a particular embodiment of the base component as a separate product, namely a base component for an antifouling paint composition, said component comprising a base component comprising a hydroxy-functional pre-polymer having at least one side chain bearing at least one terminal group of the general formula I (see above), wherein X designates a carbonyl group (>C=O), n is an integer of 0-5,000, and R₁, R₂, R₃, R₄ and R₅ are each independently selected from C₁₋₂₀-alkyl and optionally substituted phenyl; and wherein the hydroxy value of said pre-polymer is in the range of 2-400 mg KOH/Solid·g.

### Application of the coating composition

The invention further relates to a marine structure having on at least a part of the surface thereof a coating prepared from the antifouling paint composition defined herein. The marine structure may be coated with one or several layers, in particular successive layers, of the coating composition.

The coating composition according to the invention may be applied to a marine structure to be protected in one or several successive layers, typically 1 to 4 layers, preferably 1 to 2 layers. The dry film thickness (DFT) of the coating applied per layer will typically be 10 to 600 µm, preferably 20 to 500 µm, such as 40 to 400 µm. Thus, the total dry film thickness of the coating will typically be 10 to 1,800 µm, preferably 20 to 1,500 µm, in particular 40 to 1,200 µm, such as 80 to 800 µm.

The marine structure to which the coating composition according to the invention may be applied to may be any of a wide variety of solid objects that come into contact with water, for example vessels (including but not limited to boats, yachts, motorboats, motor launches, ocean liners, tugboats, tankers, container ships and other cargo ships, submarines (both nuclear and conventional), and naval vessels of all types); pipes; shore and off-shore machinery, constructions and objects of all types such as piers, pilings, bridge substructures, floatation devices, underwater oil well structures etc; nets and other mariculture installations; cooling plants; and buoys; and is especially applicable to the hulls of ships and boats and to pipes.

Prior to the application of a coating composition to a marine structure, the marine structure may first be coated with a primer-system which may comprise several layers and may be any of the conventional primer systems used in connection with application of coating compositions to marine structures. Thus, the primer system may include an anti-corrosive primer optionally followed by a layer of an adhesion-promoting primer.

The above-mentioned primer system may, for example, be a combination of an epoxy resin having an epoxy equivalent of from 160 to 600 with its curing agent (such as an amino type, a carboxylic acid type or an acid anhydride type), a combination of a polyol resin with a polyisocyanate type curing agent, or a coating material containing a vinyl ester resin, an unsaturated polyester resin or the like, as a binder system, and, if required, further containing a thermoplastic resin (such as chlorinated rubber, an acrylic resin or a vinyl chloride resin), a curing accelerator, a rust preventive pigment, a colouring pigment, an extender pigment, a solvent, a trialkoxysilane compound, a plasticizer, an additive (such as an antisagging agent or a precipitation preventive agent), or a tar epoxy resin type coating material, as a typical example.

In view hereof, the present invention also provides a method of coating a structure, comprising the steps of applying to at least a part of the structure thereof layer of an antifouling coating composition as defined herein. In some interesting embodiments, the layer is the final layer of a multi-layer coating system.

### Specific embodiments of the invention

In one preferred embodiment, the total coating composition (i.e. the base component and component b) has a solids weight ratio of at least 40 %, such as at least 50 %, such as 60-99 %, or 80-100 %, or even 70-98 %, or 85-100 %.

In a further particular embodiment, the total coating composition has a solids weight ratio of essentially 100 %. It should be understood that the expression "essentially 100 %" is intended to mean that the composition includes no solvents (or other volatiles) except for possible traces of volatiles (solvents, residual monomers, etc.) which inevitably may be present in the starting materials of the coating composition. Hence, within this embodiment, no solvents are added.

The solids weight ratio (SWR) is determination in accordance with ISO 3251:2008.

With respect to the self-polishing properties of the antifouling coating composition, it is preferred that polishing rate, as determined in accordance with the Polishing Rate Test defined herein, is at least 1 µm per 10,000 Nautical Miles.

### EXAMPLES

### Determination of acid value

The "acid value" is defined as the number of milligrams (mg) of potassium hydroxide (KOH; M_{w}= 56.1 g/mol) which is necessary for neutralizing 1 gram of a polymer, e.g. a pre-polymer. For the purpose of the present invention, the acid value relates to the pre-polymer wherein the silyl groups have been removed by hydrolysis, hence the pre-polymer having free acid groups instead of silyl ester group.

The acid value may be determined based on the composition of the pre-polymer (i.e. knowledge about the monomer constituents and their relative ratios).

As an example, the acid value may be determined for a pre-polymer made of 50.0 g triisopropylsilyl acrylate monomer (TIPSA; M_{w}=228.4 g/mol) and 50.0 g methyl methacrylate (MMA; M_{w}=100.1 g/mol). As mentioned above, the calculations will be based on the free acid analogue, hence acrylic acid is used in the calculation instead of TIPSA. 50 g TIPSA corresponds to 15.79 g acrylic acid (AA; M_{w}=72.1 g/mol).

The acid functionality constitutes 24 % (15.8 g/(15.8 g + 50.0 g)*100 %) of the pre-polymer.

The methyl methacrylate monomers constitutes 76 % (50.0 g/(15.8 g+50.0 g)*100 %) of the prepolymer.
1 gram of pre-polymer includes 3.33 mmol (1 g*24 %/72.1 g/mol) of free carboxyl groups.

It requires 187 mg (3.33 mmol * 56.1 mg/mmol) of KOH to neutralize the free carboxyl groups of the pre-polymer. This value is the add value (AV).

### Determination of hydroxy value

The hydroxy value (OHV) is in principle calculated in the same manner as the acid value, and represents the milligrams of KOH equivalent to the hydroxyl content of 1 gram of polymer, e.g. a pre-polymer (non-hydrolysed), i.e. according to the unit "mg KOH/Solid·g".

As an example, the hydroxy value is calculated for a (100%) 2-hydroxyethyl methacrylate (HEMA; M_{w}= 130.1 g/mol) polymer.

1 gram of polymer includes 7.69 mmol (1 g/130.1 g/mol) of hydroxy groups.

431 mg (7.69 mmol * 56.1 mg/mmol) of KOH is equivalent to the hydroxyl content of 1 gram of polymer. This value is the hydroxy value (OHV).

### Polishing rate test

A stainless steel test panel (13.5 x 7 cm²) with a curvature corresponding to that.of a cylindrical drum with a diameter of 1 m is first coated with 150 µm (DFT) of an epoxy primer (Hempadur Primer 45141 ex Hempel A/S). After 24 hours, the panel is coated with 100 µm (DFT) of a commercial epoxy tie coat (HEMPADUR 45182 ex Hempel A/S) applied by air spraying.

After minimum 24 hours drying in the laboratory at room temperature the test paint is applied by air spraying in a DFT of approximately 250 µm. The panel is dried for at least 1 week in the laboratory at room temperature before testing. The initial thickness of the paint system is measured using a coating thickness tester (Kett, LZ-200C).

The test panel is fixed onto the convex surface of a cylindrical drum of 1 m in diameter and is rotated in sea water with a salinity in the range of 31 to 35 parts per thousand at an average temperature of 24 °C at a test site in Naoshima, Japan which is situated at latitude 34 North and longitude 134 East.

The rotor is rotated at a peripheral speed of 15 knots for a relative distance of at least 39,000 Nautical miles.

The thickness is controlled with periodic inspections using a coating thickness tester (Kett, LZ-200C). An initial inspection is made before the rotor test. The polishing is the difference between the film thickness measured at a given inspection and the film thickness measured in the initial inspection.

### Naoshima test variant.

The test panel is fixed onto the convex surface of a cylindrical drum of 1 m in diameter and is rotated in sea water with a salinity in the range of 31 to 35 parts per thousand at an average temperature of 24 °C at a test site In Naoshima, Japan which is situated at latitude 34 North and longitude 134 East.

### Vilanova test variant.

The test panel is fixed onto the convex surface of a cylindrical drum of 1 m in diameter and is rotated in sea water with a salinity in the range of 37-38 parts per thousand at an average temperature of 17-18°C at a test site in Vilanova i la Geltrú in Northeastern Spain, which is situated at latitude 41.13 North and longitude 1.43 East.

### Antifouling property test

An acrylic test panel (10 x 45 cm²), sandblasted on one side to facilitate adhesion of the coating, is first coated with 80 micron (DFT) of a commercial vinyl tar primer (Hempanyl 16280 ex Hempel's Marine Paints A/S) applied by air spraying. After a minimum drying time of 24 hours in the laboratory at room temperature the test paint is applied by air spraying to a DFT of 90-100 microns. After dried 72 hours, at least, the test panels are fixed on a rack and immersed in seawater.

Toba is located in Japan on the cost of the Pacific Ocean. In this test site the panels are immersed in seawater. Inspection of the panels was made and the antifouling performance is evaluated according to the scale above. Every 4-8 weeks, inspection of the panels is made and the antifouling performance is evaluated according to the following scale:

| Level | Description |
|---|---|
| EXCELLENT | Only slime |
| GOOD | Algae + Animals < 10% |
| FAIR | 10% < (Algae + Animals) < 25% |
| POOR | Algae + Animals > 25% |

### Lab Rotor Test

Polishing and leaching characteristics are measured using a rotary set-up similar to the one described by Kiil et al. (Kiil, S, Weinell, C E, Yebra, D M, Dam-Johansen, K, "Marine biofouling protection: design of controlled release antifouling paints." In: Ng, K M, Gani, R, Dam-Johansen, K (eds.) Chemical Product Design; Towards a Perspective Through Case Studies, 23IDBN-13: 978-0-444-52217-7. Part II (7), Elsevier. (2006)). The set-up consists of a rotary rig, which has two concentric cylinders with the inner cylinder (rotor, diameter of 0.3 m and height 0.17 m) capable of rotation. The cylinder pair is immersed in a tank containing about 400-500 litres of Artificial Seawater:

| Composition of Artificial Seawater | |
|---|---|
| Salt | Concentration in g/L |
| NaCl | 32 |
| MgSO₄·7H₂O | 14 |
| NaHCO₃ | 0.2 |

The tank is fitted with baffles to break the liquid flow, which enhances turbulence and enables faster mixing of the species released from the paints and enhance heat transfer from a thermostating system. The purpose of using two cylinders is to create a close approximation to couette flow (flow between two parallel walls, where one wall moves at a constant velocity). The rotor is operated at 20 knots at 25 °C (unless otherwise specified), and the pH is adjusted frequently to 8.2 using 1 M sodium hydroxide or 1 M hydrochloric acid.

Samples are prepared using overhead transparencies (3M PP2410) that are primed using two-component paint (Hempadur 4518 ex Hempel A/S) applied using a Doctor Blade applicator with a gap size of 200 µm. Coating samples are applied adjacent to each other using a Doctor Blade applicator with a gap of 250 µm. After drying for 1 day, the coated transparency is cut in strips of 2 cm resulting in eight samples of 1.5 x 2 cm² on a long (21 cm) strip. The strips are mounted on the rotor, and left to dry for a week.

After one week, the test is initiated, and during the experiment, samples are removed for inspection of polishing and leaching depths at least two times in 12 weeks. The samples are dried for three days at ambient conditions, after which they are cut in half and cast in paraffin. The internal front of the sample is planed off before total film thickness and leached layer thickness are established using light microscopy (coating cross-section inspection).

Polishing and leaching results of specific model paint formulations of the present invention are listed in table 5.

### Blister Box Test

### Preparation of panels

Acrylic panels (1 55x1 00x5 mm) are first coated with 80 pm (dry film thickness, DFT) of a commercial vinyl tar primer (Hempanyl 16280, from Hempel's Marine Paints) applied by air spraying. After a minimum of 24 hours of drying in the laboratory at room temperature antifouling paints (model paints or commercial paints) are applied using a Doctor Blade applicator with a gap size of 500 µm. The panels are dried for a minimum of 7 days in the laboratory at room temperature before testing.

### Testing

Tests panels are tested in a Cleveland Condensation Tester (QCT from Q-Panel) In condensation and dry-off mode. QCT equipment is described in standard method ASTM DI 735-92: *Testing water resistance of coatings using water fog apparatus.* Coated specimens are placed in an enclosed chamber where cycles of water fog (8 hours)/drying (4 hours) are applied. The temperature in the chamber is maintained at 60°C. During the water fog cycle water penetrates into the film while during the drying cycle water "escapes" from the paint film.
The test is operated for seven weeks and the paints are evaluated after day 1, day 3, day 7, and day 21 for film defects as described below.

Blister evaluation is run following standard ISO4628-4.

### Preparation of coating compositions

Procedure of the pre-polymer synthesis of pre-polymers 1-13: A pre-mix of the monomers (triisopropylsilyl acrylate, methyl methacrylate, butylacrylate and 2-hydoroxyethyl methacrylate and methoxyethylacrylate), azobis-methylbutyronitrile, and xylene was prepared in the prescribed proportions (see Table 1) and was charged to a temperature-controlled reaction vessel equipped with a stirrer, a reflux condenser, a nitrogen inlet, and a pre-mix feed inlet. The reaction vessel was heated and maintained at 125°C and the pre-mix was charged to the reaction vessel at a constant rate for 4 hours under an atmosphere of nitrogen. After a further 30 minutes, a pre-mix of the initiator and xylene was charged to the reaction vessel at a constant rate for 1 hours. After a further 30 minutes, the temperature of the reaction vessel was cooled.

Curing agents: HMDI, pre-polymer of HMDI, or pre-polymer of MDI.

Procedure of the polymer synthesis of reference 1 : Starting materials comprising a mixture of diethyl oxalate, 2,2,4-trimethyl-1,3-pentanediol, 2-butyl-2-ethyl-1,3-propanediol and dibutyltin oxide were charged to a temperature-controlled reaction vessel equipped with a stirrer, thermometer, condenser and nitrogen inlet. The mixture was heated slowly under nitrogen to 190 °C while the condensate was distilled. The temperature was maintained at 190 °C for 15 hours. Solvent (xylene) was added, and the polymer solution was cooled to room temperature.

Pre-polymers 1-13 shown in Table 1 are prepared according to these preparation procedures.

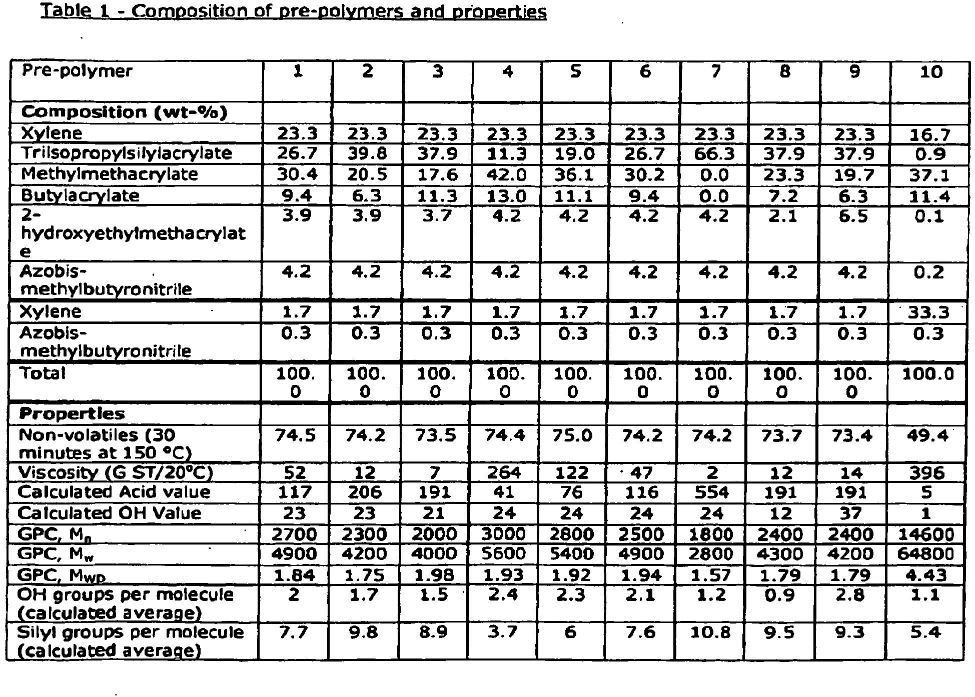

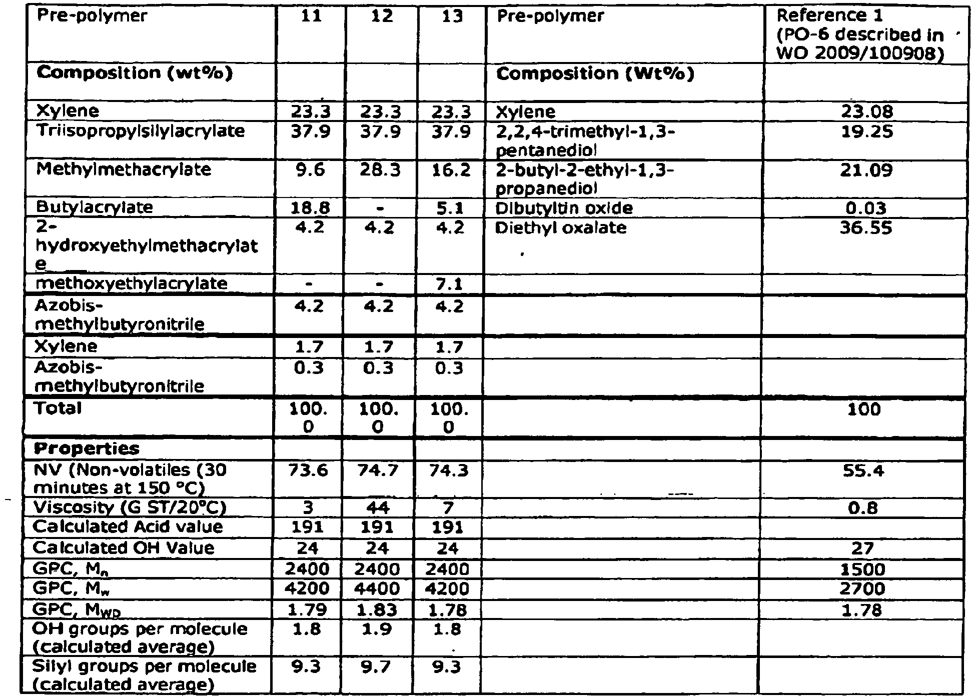

The polymers are characterized by Gel Permeation Chromatography (GPC) measurement. The molecular weight distribution (MWD) was determined using a HLC-8220 instrument with two TSKgel SuperMultiporeHZ-M columns from Tosoh, tetrahydrofuran (THF) as eluent at 40 °C and at a constant flow rate of 0.350 mL/min and with a refractive index (RI) detector. The columns were calibrated using polystyrene standards. The samples prepared by dissolving an amount of polymer solution corresponding to 40 mg dry polymer in 10 mL THF.

### Basic formulation of model paints

Model paints 1-28 and reference paint 1 (See Table 2) were prepared according to the following procedure:

In each instance, the model paints were prepared by mixing and grinding of all raw materials (Base components) in a closed can with glass beads for 30 min. The grain size obtained was about 50 µm.

The Base component and Component b were mixed at 25°C prior to application.

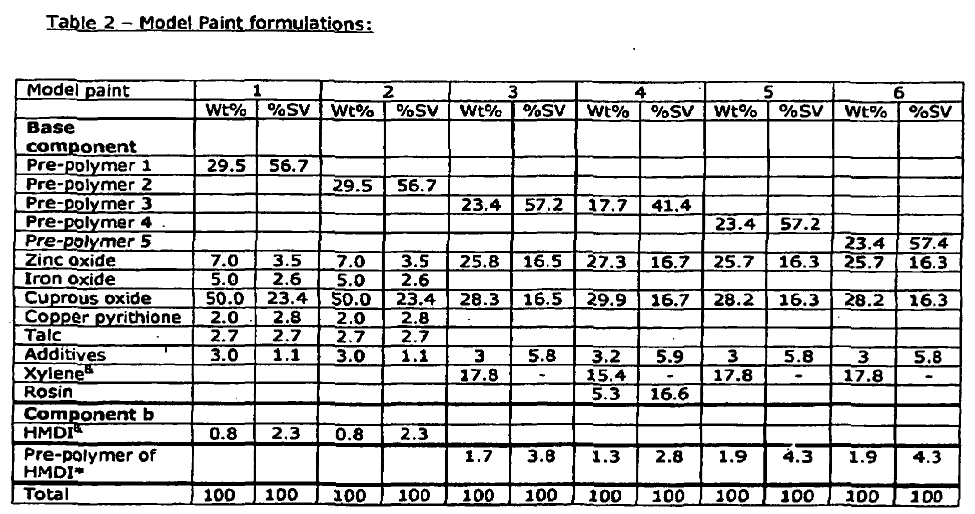

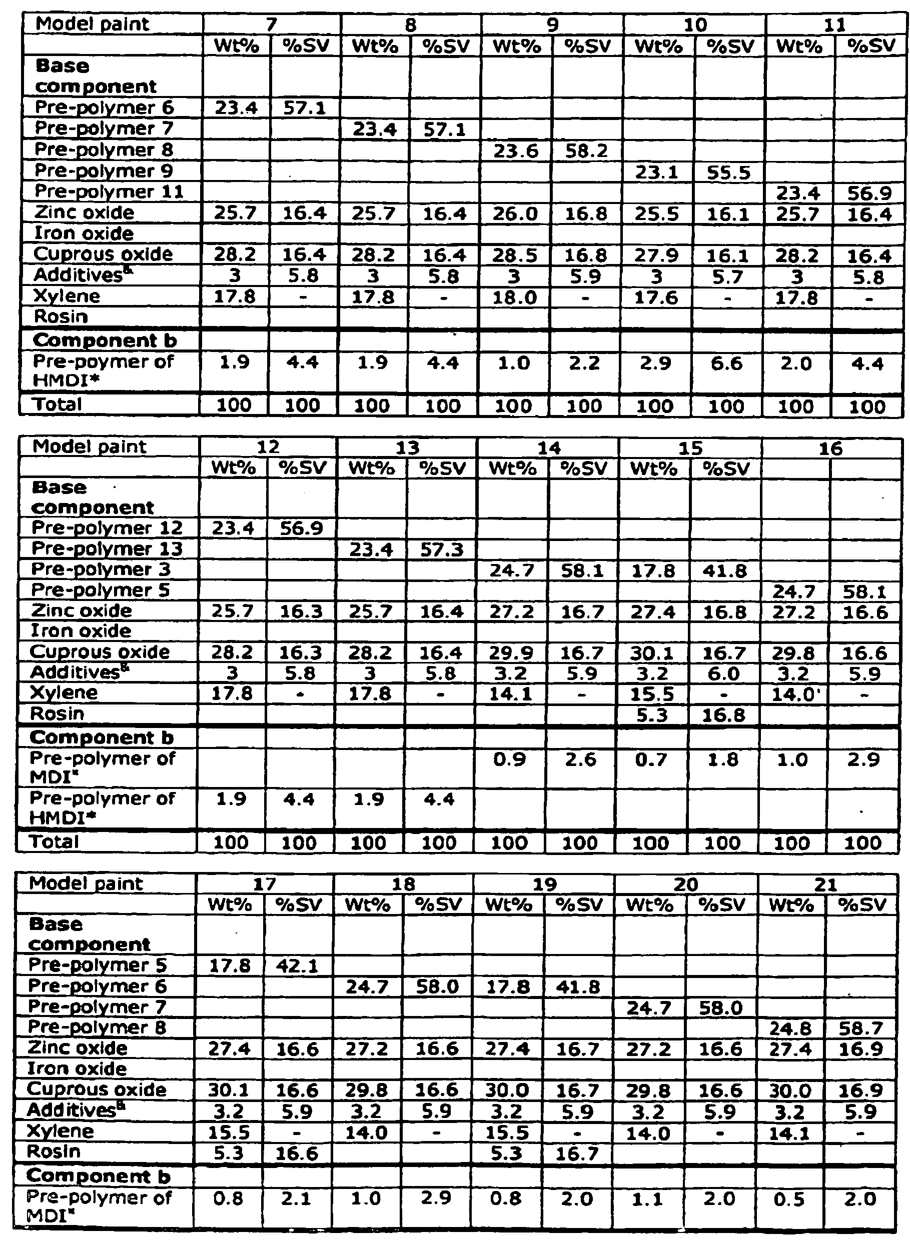

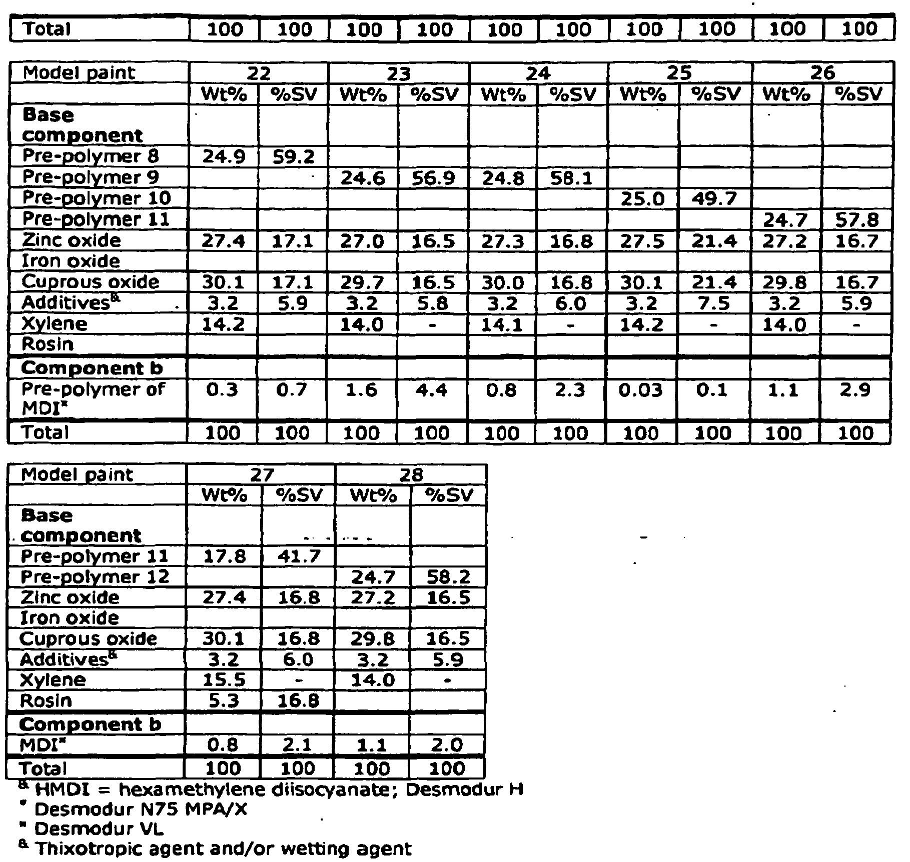

| Reference paint | **Ref 1** |
|---|---|
| | Wt% |
| **Base component** | |
| Pre-polymer of Reference 1 | 26.4 |
| Cuprous oxide | 39.6 |
| Copper pyrithione | 1.61 |
| Iron oxide | 1.98 |
| Titanium dioxide | 1.00 |
| Barium sulphate | 7.47 |
| Magnesium carbonate | 5.20 |
| Nepheline syenite | 2.85 |
| Calcium sulphate | 1.2 |
| Thixotropic agent | 1.5 |
| Xylene | 4.60 |

| **Component b*** | |
|---|---|
| HMDI (Desmodur N75 MBA/X) | 5.47 |
| Dibutyltin Dilaurate (accelerator) | 250 ppm |

| | |
|---|---|
| * The curing agent and accelerator are mixed with the Base component just before use. | |

### Results

Polishing rates and leaching rates were determined for model paint formulations of the present invention according to the test methods as defined herein. The results are listed in Table 3, Table 4 and Table 5:

**Table 3: Model paints, polishing determined according to polishing rate test, Naoshima variant.**

| Model paint | Acid value | OH value | Tg | MW | OH groups per molecule | Silyl groups per molecule | Curing agent | Polishing (µm per 10,000 Nautical miles)^{#} |
|---|---|---|---|---|---|---|---|---|
| 1 | 117 | 23 | 50 | 4900 | 2.0 | 7.7 | HMDI | 1 |
| 2 | 206 | 23 | 25 | 4200 | 1.7 | 9.8 | HMDI | 5 |
| Globic NCT* | | | | | | | | 1 |

| | | | | | | | | |
|---|---|---|---|---|---|---|---|---|
| * Commercial top-tier self-polishing antifouling coating composition from Hempel A/S (reference). ^{#} Measured after testing for 35 weeks. Polishing was maintained for at least 74 weeks (last inspection). | | | | | | | | |

**Table 4: Model paints, polishing determined according to polishing rate test, Vilanova variant.**

| Model paint | Acid value | OH value | Tg | MW | OH groups per molecule | Silyl groups per molecule | Curing agent | Polishing (µm per 10,000 Nautical miles) |
|---|---|---|---|---|---|---|---|---|
| 3 | 191 | 21 | 9 | 4000 | 1.5 | 8.9 | HMDI | 14 |
| 5 | 41 | 24 | 40 | 5600 | 2.4 | 3.7 | HMDI | 0 |
| 6 | 76 | 24 | 34 | 5400 | 2.3 | 6.0 | HMDI | 4 |
| 7 | 116 | 24 | 28 | 4900 | 2.1 | 7.6 | HMDI | 13 |
| 8 | 554 | 24 | 0 | 2800 | 1.2 | 10.5 | HMDI | 16 |
| 9 | 191 | 12 | 19 | 4300 | 0.9 | 9.5 | HMDI | # |
| 10 | 191 | 37 | 19 | 4200 | 2.8 | 9.3 | HMDI | 11 |
| 11 | 191 | 24 | -6 | 4200 | 1.8 | 9.3 | HMDI | 10 |
| 12 | 191 | 24 | 36 | 4400 | 1.9 | 9.7 | HMDI | # |
| 13 | 191 | 24 | 16 | 4200 | 1.8 | 9.3 | HMDI | # |

| | | | | | | | | |
|---|---|---|---|---|---|---|---|---|
| # It was not possible to determine the polishing rate due to peeling. It is contemplated that the physical properties of these compositions can be improved by adding rosin and/or a plasticizer, and even further improved by adding fibres. | | | | | | | | |

**Table 5: Model paints, polishing determined according to lab rotor test.**

| Model paint | Acid value | OH value | Tg | MW | OH groups per molecule | Silyl groups per molecule | Curing agent | Lab rotor test | |
|---|---|---|---|---|---|---|---|---|---|
| | | | | | | | | Polishing (µm per 10,000 Nautical miles) | Leaching (µm after 10,000 Nautical miles) |
| 4 | 191 | 21 | 9 | 4000 | 1.5 | 8.9 | HMDI | 2 | |
| 14^{#} | 191 | 21 | 9 | 4000 | 1.5 | 8.9 | MDI | 7 | 10 |
| 15 | 191 | 21 | 9 | 4000 | 1.5 | 8.9 | MDI | 1 | 6 |
| 16 | 76 | 24 | 34 | 5400 | 2.3 | 6.0 | MDI | 1 | 8 |
| 17 | 76 | 24 | 34 | 5400 | 2.3 | 6.0 | MDI | 3 | 13 |
| 18 | 116 | 24 | 28 | 4900 | 2.1 | 7.6 | MDI | 5 | 29 |
| 19 | 116 | 24 | 28 | 4900 | 2.1 | 7.6 | MDI | 7 | 25 |
| 20^{#} | 554 | 24 | 0 | 2800 | 1.2 | 10.8 | MDI | 10 | 7 |
| 21* | 191 | 12 | 19 | 4300 | 0.9 | 9.5 | MDI | 6 | 1 |
| 22^{#} ** | 191 | 12 | 19 | 4300 | 0.9 | 9.5 | MDI | 9 | 10 |
| 23^{#} | 191 | 37 | 19 | 4200 | 2.8 | 9.3 | MDI | 16 | 16 |
| 24** | 191 | 37 | 19 | 4200 | 2.8 | 9.3 | MDI | 13 | 34 |
| 25 | 5 | 1 | 49 | 64800 | 1.1 | 5.4 | MDI | 0.5 | 7 |
| 26^{#} | 191 | 24 | -6 | 4200 | 1.8 | 9.3 | MDI | 9 | 14 |
| 27 | 191 | 24 | -6 | 4200 | 1.8 | 9.3 | MDI | 4 | 15 |
| 28^{#} | 191 | 24 | 36 | 4400 | 1.9 | 9.7 | MDI | 20 | 15 |
| Ref.1 | | | | 2700 | | 0 | HMDI | 2 | 0 |

| | | | | | | | | | |
|---|---|---|---|---|---|---|---|---|---|
| # One Inspection only ** 50% curing agent compared to model paints 21 and 23 | | | | | | | | | |

The model paints and reference paint 1 were tested for tendency of blistering according to the Blister Box test described above. Significant blistering was observed in reference 1 paint, whereas blistering was not observed in any of the model paints tested.

## Claims

1. A self-polishing antifouling coating composition comprising
a. a base component comprising a hydroxy-functional pre-polymer which is curable in the presence of a curing agent comprising one or more polyisocyanates (component b), said pre-polymer having a weight average molecular weight (M_{w}) in the range of 1,000-120,000 g/mol, and said pre-polymer having at least one side chain bearing at least one terminal group of the general formula (II): 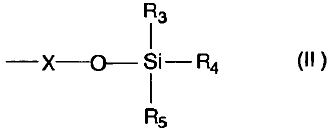 wherein X designates a carbonyl group (>C=O), and R₃, R₄ and R₅ are each independently selected from C₁₋₂₀-alkyl and optionally substituted phenyl and wherein the hydroxy value of the pre-polymer is in the range of 2-400 mg KOH/Solid·g; and
b. a curing agent comprising one or more polyisocyanates (component b)
the coating composition further comprises antifouling agent(s) in an amount of 0.05-25 % by solids volume of the coating composition.

2. The composition according to claim 1, wherein the isocyanate equivalent of said one or more polyisocyanates is in the range of 50-3,000.

3. The composition according to claim 2, wherein the isocyanate equivalent of said one or more polyisocyanates is in the range of 80-500.

4. The composition according to any one of the preceding claims, wherein the ratio between the hydroxy groups of the pre-polymer and the isocyanate groups of the polyisocyanate(s) (NCO:OH) is in the range of 0.3:1 to 1.2:1.

5. The composition according to any one of the preceding claims, wherein the pre-polymer has a backbone of (meth)acrylate-type monomers.

6. The composition according to any one of the preceding claims, wherein the coating composition further comprises Cu₂O in an amount of 1-40 % by solids volume of the coating composition.

7. The composition according to any one of the preceding claims, wherein the hydroxy value of the pre-polymer is in the range of 5-300 mg KOH/Solid·g.

8. The composition according to any one of the preceding claims, wherein the acid value of the pre-polymer after the silyl ester group is completely hydrolysed is in the range of 5-500 mg KOH/Solid·g.

9. The composition according to any one of the preceding claims, wherein the weight average molecular weight of the pre-polymer is in the range of 1,000-50,000 g/mol.

10. The composition according to any one of the preceding claims, wherein the glass transition temperature, T_{g}, of the pre-polymer is in the range of -10 to 100 °C.

11. The composition according to any one of the preceding claims, wherein the total coating composition has a solids weight ratio of at least 40 %.

12. The composition according to any one of the preceding claims, wherein the polishing rate, as determined in accordance with the Polishing Rate Test defined herein, is at least 1 µm per 10,000 Nautical Miles.

13. A kit comprising the antifouling paint composition as defined in any one of the preceding claims, wherein a first container holds the base component and a second container holds component b.

14. A base component for an antifouling paint composition, said component comprising a hydroxy-functional pre-polymer having a weight average molecular weight (M_{w}) in the range of 1,000-120,000 g/mol, and having at least one side chain bearing at least one terminal group of the general formula (II): 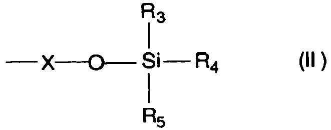 wherein X designates a carbonyl group (>C=O), and R₃, R₄ and R₅ are each independently selected from C₁₋₂₀-alkyl and optionally substituted phenyl;
wherein the hydroxy value of said pre-polymer is in the range of 2-400 mg KOH/Solid·g;
and wherein the base component further comprises antifouling agent(s).

15. The base component according to claim 14, wherein the pre-polymer has a backbone of (meth)acrylate-type monomers.

16. A marine structure having on at least a part of the surface thereof a coating prepared from the antifouling paint composition according to any one of claim 1-12.

17. A method of coating a structure, comprising the steps of applying to at least a part of the structure thereof a layer of an antifouling coating composition as defined in any one of the claims 1-12.

18. The method according to claim 17, wherein said layer is the final layer of a multi-layer coating system.

## Patentansprüche

1. Selbstpolierende Antifäulnis-Beschichtungszusammensetzung, umfassend:
a. eine Basiskomponente, umfassend ein hydroxyfunktionelles Vorpolymer, das in Gegenwart eines Härtungsmittels härtbar ist, das ein oder mehrere Polyisocyanate (Komponente b) umfasst, wobei das Vorpolymer ein gewichtsmittleres Molekulargewicht (M_{w}) im Bereich von 1.000 - 120.000 g/mol aufweist, und wobei das Vorpolymer wenigstens eine Seitenkette aufweist, die wenigstens eine endständige Gruppe mit der allgemeinen Formel (II) trägt: 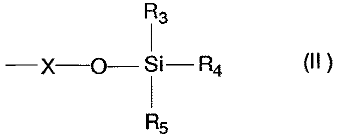 wobei X eine Carbonylgruppe (>C=0) bezeichnet und R₃, R₄ und R₅ jeweils unabhängig voneinander aus C₁₋₂₀-Alkyl und optional substitutiertem Phenyl ausgewählt sind und wobei die Hydroxylzahl des Vorpolymers im Bereich von 2 - 400 mg KOH/Feststoff·g liegt; und
b. ein Härtungsmittel, das ein oder mehrere Polyisocyanate (Komponente b) umfasst;
wobei die Beschichtungszusammensetzung ferner (ein) Antifäulnismittel in einer Menge von 20 0,05 bis 25 % bezogen auf das Feststoffvolumen der Beschichtungszusammensetzung umfasst.

2. Zusammensetzung nach Anspruch 1, wobei das Isocyanat-Äquivalent des einen oder der mehreren Polyisocyanate im Bereich von 50 - 3.000 liegt.

3. Zusammensetzung nach Anspruch 2, wobei das Isocyanat-Äquivalent des einen oder der mehreren Polyisocyanate im Bereich von 80 - 500 liegt.

4. Zusammensetzung nach einem der vorhergehenden Ansprüche, wobei das Verhältnis zwischen den Hydroxygruppen des Vorpolymers und den Isocyanatgruppen des Polyisocyanats (der Polyisocyanate) (NCO:OH) im Bereich von 0,3:1 bis 1,2:1 liegt.

5. Zusammensetzung nach einem der vorhergehenden Ansprüche, wobei das Vorpolymer ein Gerüst aus Monomeren vom (Meth)acrylat-Typ aufweist.

6. Zusammensetzung nach einem der vorhergehenden Ansprüche, wobei die Beschichtungszusammensetzung ferner CU₂O in einer Menge von 1 - 40 % bezogen auf das Feststoffvolumen der Beschichtungszusammensetzung umfasst.

7. Zusammensetzung nach einem der vorhergehenden Ansprüche, wobei die Hydroxylzahl des Vorpolymers im Bereich von 5 - 300 mg KOH/Feststoff·g liegt.

8. Zusammensetzung nach einem der vorhergehenden Ansprüche, wobei die Säurezahl des Vorpolymers nach vollständiger Hydrolyse der Silylestergruppe im Bereich von 5 - 500 mg KOH/Feststoff·g liegt.

9. Zusammensetzung nach einem der vorhergehenden Ansprüche, wobei das gewichtsmittlere Molekulargewicht des Vorpolymers im Bereich von 1.000 - 50.000 g/mol liegt.

10. Zusammensetzung nach einem der vorhergehenden Ansprüche, wobei die Glasübergangstemperatur T_{g} des Vorpolymers im Bereich von -10 bis 100 °C liegt.

11. Zusammensetzung nach einem der vorhergehenden Ansprüche, wobei die gesamte Beschichtungszusammensetzung einen Feststoffgewichtsanteil von wenigstens 40 % aufweist.

12. Zusammensetzung nach einem der vorhergehenden Ansprüche, wobei die Polierrate, wie sie gemäß dem hierin definierten Polierratentest bestimmt wird, wenigstens 1 µm pro 10.000 Seemeilen beträgt.

13. Kit, umfassend die Antifäulnisanstrich-Zusammensetzung nach einem der vorhergehenden Ansprüche, wobei ein erster Behälter die Basiskomponente und ein zweiter Behälter die Komponente b enthält.

14. Basiskomponente für eine Antifäulnisanstrich-Zusammensetzung, wobei die Komponente ein hydroxyfunktionelles Vorpolymer umfasst, das ein gewichtsmittleres Molekulargewicht (M_{w}) im Bereich von 1.000 - 120,000 g/mol aufweist und wenigstens eine Seitenkette aufweist, die wenigstens eine endständige Gruppe mit der allgemeinen Formel (II) trägt: 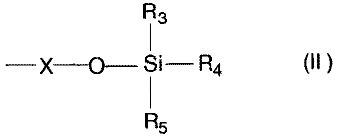 wobei X eine Carbonylgruppe (>C=0) bezeichnet und R₃, R₄ und R₅ jeweils unabhängig voneinander aus C₁₋₂₀-Alkyl und optional substitutiertem Phenyl ausgewählt sind;
wobei die Hydroxylzahl des Vorpolymers im Bereich von 2 bis 400 mg KOH/Feststoff·g liegt;
und wobei die Basiskomponente ferner (ein) Antifäulnismittel umfasst.

15. Basiskomponente nach Anspruch 14, wobei das Vorpolymer ein Gerüst aus Monomeren vom (Meth)acrylat-Typ aufweist.

16. Schiffsstruktur, die an wenigstens einem Teil ihrer Oberfläche eine Beschichtung aufweist, die aus der Antifäulnisanstrich-Zusammensetzung nach einem der Ansprüche 1 - 12 hergestellt ist.

17. Verfahren zum Beschichten einer Struktur, umfassend die Schritte des Auftragens einer Schicht aus einer Antifäulnis- Beschichtungszusammensetzung nach einem der Ansprüche 1 - 12 auf wenigstens einen Teil der Struktur.

18. Verfahren nach Anspruch 17, wobei die Schicht die abschließende Schicht eines mehrschichtigen Beschichtungssystems ist.

## Revendications

1. Composition de revêtement antisalissure autopolissante comprenant
a. un composant de base comprenant un prépolymère à fonctionnalité hydroxy qui est durcissable en présence d'un agent de durcissement comprenant un ou plusieurs polyisocyanates (composant b), ledit prépolymère ayant un poids moléculaire moyen en poids (Mₚ) compris dans la plage allant de 1 000 - 120 000 g/mol, et ledit prépolymère ayant au moins une chaîne latérale portant au moins un groupe terminal de formule générale (II) : 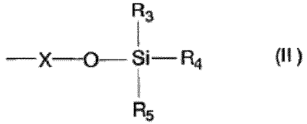 dans laquelle X représente un groupe carbonyle (>C=O) et R₃, R₄ et R₅ sont chacun indépendamment choisis parmi un groupe alkyle en C₁₋₂₀ et un groupe phényle facultativement substitué et dans laquelle l'indice d'hydroxy du prépolymère est compris dans la plage allant de 2 - 400 mg de KOH/g de solide ; et
b. agent de durcissement comprenant un ou plusieurs polyisocyanates (composant b),
la composition de revêtement comprend en outre un ou plusieurs agents antisalissures en une quantité de 0,05 - 25 % en volume de matières solides de la composition de revêtement.

2. Composition selon la revendication 1, dans laquelle l'équivalent d'isocyanate dudit ou desdits polyisocyanates est compris dans la plage allant de 50 - 3 000.

3. Composition selon la revendication 2, dans laquelle l'équivalent d'isocyanate dudit ou desdits polyisocyanates est compris dans la plage allant de 80 - 500.

4. Composition selon l'une quelconque des revendications précédentes, dans laquelle le rapport entre les groupes hydroxy du prépolymère et les groupes isocyanate du ou des polyisocyanates (NCO:OH) est compris dans la plage allant de 0,3:1 à 1,2:1.

5. Composition selon l'une quelconque des revendications précédentes, dans laquelle le prépolymère possède un squelette de monomères de type (méth)acrylate.

6. Composition selon l'une quelconque des revendications précédentes, dans laquelle la composition de revêtement comprend en outre du Cu₂O en une quantité de 1 - 40 % en volume de matières solides de la composition de revêtement.

7. Composition selon l'une quelconque des revendications précédentes, dans laquelle l'indice d'hydroxy du prépolymère est compris dans la plage allant de 5 - 300 mg de KOH/g de solide.

8. Composition selon l'une quelconque des revendications précédentes, dans laquelle l'indice d'acide du prépolymère après l'hydrolyse complète du groupe ester de silyle est compris dans la plage allant de 5 - 500 mg de KOH/g de solide.

9. Composition selon l'une quelconque des revendications précédentes, dans laquelle le poids moléculaire moyen en poids du prépolymère est compris dans la plage allant de 1 000 - 50 000 g/mol.

10. Composition selon l'une quelconque des revendications précédentes, dans laquelle la température de transition vitreuse, T_{g}, du prépolymère est comprise dans la plage allant de -10 à 100 °C.

11. Composition selon l'une quelconque des revendications précédentes, dans laquelle la composition de revêtement totale a un rapport en poids de matières solides d'au moins 40 %.

12. Composition selon l'une quelconque des revendications précédentes, dans laquelle le taux de polissage, comme déterminé par le test de taux de polissage défini ici, est d'au moins 1 µm pour 10 000 milles nautiques.

13. Kit comprenant la composition de peinture antisalissure telle que définie selon l'une quelconque des revendications précédentes, dans lequel un premier contenant contient le composant de base et un second contenant contient le composant b.

14. Composant de base pour une composition de peinture antisalissure, ledit composant comprenant un prépolymère à fonctionnalité hydroxy ayant un poids moléculaire moyen en poids (Mₚ) compris dans la plage allant de 1 000 - 120 000 g/mol, et ayant au moins une chaîne latérale portant au moins un groupe terminal de formule générale (II) : 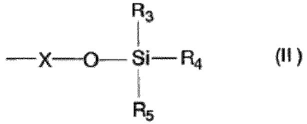 dans laquelle X représente un groupe carbonyle (>C=O) et R₃, R₄ et R₅ sont chacun indépendamment choisis parmi un groupe alkyle en C₁₋₂₀ et un groupe phényle facultativement substitué ;
dans lequel l'indice d'hydroxy dudit prépolymère est compris dans la plage allant de 2 - 400 mg de KOH/g de solide ;
et dans lequel le composant de base comprend en outre un ou plusieurs agents antisalissures.

15. Composant de base selon la revendication 14, dans lequel le prépolymère possède un squelette de monomères de type (méth)acrylate.

16. Structure marine ayant sur au moins une partie de sa surface un revêtement préparé à partir de la composition de peinture antisalissure telle selon l'une quelconque des revendications 1 - 12.

17. Procédé de revêtement d'une structure, comprenant les étapes consistant à appliquer sur au moins une partie de la structure une couche d'une composition de revêtement antisalissure telle que définie selon l'une quelconque des revendications 1 - 12.

18. Procédé selon la revendication 17, dans lequel ladite couche est la couche finale d'un système de revêtement multicouche.
